**Europäisches Patentamt**

**European Patent Office**

**Office européen des brevets**

(11) Veröffentlichungsnummer: **0 471 192 A2**

# EUROPÄISCHE PATENTANMELDUNG

(21) Anmeldenummer: **91111773.7**

(22) Anmeldetag: **15.07.91**

(51) Int. Cl.5: **B29C 73/08**

(30) Priorität: **13.07.90 CS 3481/90**

(43) Veröffentlichungstag der Anmeldung:
**19.02.92 Patentblatt 92/08**

(84) Benannte Vertragsstaaten:
**AT DE FR IT**

(71) Anmelder: **BMB SPOL. S R.O.**
**Resslovo nabr. 3**
**Opava(CS)**

(72) Erfinder: **Miltak, Michal**
**Kolonie 1156**
**Bzenec(CS)**

(74) Vertreter: **Patentanwälte Beetz sen. - Beetz**
**jun. Timpe - Siegfried - Schmitt-Fumian-**
**Mayr**
**Steinsdorfstrasse 10**
**W-8000 München 22(DE)**

(54) **Einrichtung zur Reparatur von schlauchlosen Reifen, deren Beschädigung durch Einstich entstand.**

(57) Gegenstand der Erfindung ist eine Vorrichtung zum Reparieren der Durchstiche von schlauchlosen Reifen mittels Gumminieten und ohne Demontage des Reifens von der Kraftwagenfelge. Sie besteht aus einem pneumatischen Kraftzylinder mit einem verschiebbar gelagerten Kolben und einem zerlegbaren Durchzieher. An seinem freien Ende ist der rohrförmige Durchziehen mit einer konischen Anlauffläche versehen, die ins konische Ende eines ausnehmbaren, im Hohlraum des Durchziehers vorgesehenen Dornes allmählich übergeht. An seinem abgewendeten Ende weist der Dorn eine Umfangs-Fixierfläche auf, deren äusserer Durchmesser grösser ist als der Durchmesser eines Hohlraumes zum Führen der Kolbenstange des Kolbens. Zwischen dem Kolben und der zu diesem Hohlraum zugewandten Stirnseite des Kolbenarbeitsraumes ist ein elastisches Element vorgesehen. Eine Öffnung im Kraftzylinder dient zum Anschliessen einer Druckluftquelle.

## Gebiet der Technik

Die Erfindung bezieht sich auf eine Einrichtung zur Reparatur von Einstichen in Schlauchlosen Reifen mit Hilfe von Gumminieten und zwar Reifen sowohl demontierter als auch nicht demontierter aus der Felge.

## Der jetzige Stand der Technik

Z.Zt. werden durch einen Einstich die beschädigten Schlauchlosen Reifen mit Hilfe von Gumminieten repariert, die in kaltem Zustand Wulkanisierbar sind. Diese werden mit Hilfe von mechanischem Werkzeug mit einem Rohrdurchzieher in den Einstich eingeführt. Die Voraussetzung für eine qualitätsgemässe Reparatur des Einstiches mit Hilfe dieser Werkzeuge ist es die Notwendigkeit, den Reifen aus der Felge zu demontieren und den Einstich durch Fräsung zu bearbeiten. Dieses führt in den meisten Fällen zur Beeinträchtigung der tragender Struktur des Reifens. Die Arbeit mit dem mechanischen Werkzeug ist auch zeitraubend und beeinsprucht einen hohen Mass an Entwicklung physischer Mühe des Arbeiters, und zwar sowohl bei der Einführung des Rohrdurchziehers, als auch bei den eigentlichen Eindrücken des Gumminietes in den Einstich.

## Das Prinzip der Erfindung

Die angeführten Mengel werden in einem grossen Ausmass durch eine Einrichtung zur Reparatur von Einstichen Schlauchloser Reifen mit Hilfe von Gumminieten behoben. Die Einrichtung setzt sich zusammen aus einem hohlen walzwörmigen Werkzeug, welches von einer Seite in länglicher Achse mit einem beweglichen Kolben und von der anderer Seite, in länglicher Achse angeordneten Rohrdurchzieher ausgerüstet ist. Der Rohrdurchzieher hat auf der äusseren Fläche am freien Ende eine kegelförmige auflaufende Fläche, die stetig zum kegelförmigen Ende des Durchziehdornes verläuft. Der Durchziehdorn ist im Hohlraum des Rohrdurchziehers angeordnet, und am anderen Ende ist er mit einer anderen, die Pheripherie fixierender Fläche versehen, derer äusserer Durchmesser grösser ist als der Durchmesser des Hohlraumes des Rohrförmigen Durchziehers und grösser, als der Durchmesser des zugewandten leitenden Hohlraumes der Kolbenstange des Kolbens, und zwischen dem und der Sirnwald seines Arbeitsraumes auf der Zugewandten Seite zum leitenden Hohlraum ist ein federnder Element angebracht, wobei in der Gegenseite, am Körper des Werkzeuges eine Öffnung ist, die für die Zufuhr von Druckluf dient. Die Einrichtung nach dieser Erfindung ermöglicht somit nicht nur die Reparatur des Durchstiches am Reifen ohne deren Demontierung aus der Felge, sondern beseitigt auch die physische Mühe bei der Reparatur und verkürzt wesentlich die zur Reparatur notwendige Zeit.

## Übersicht der Abbildung auf den Zeichnungen

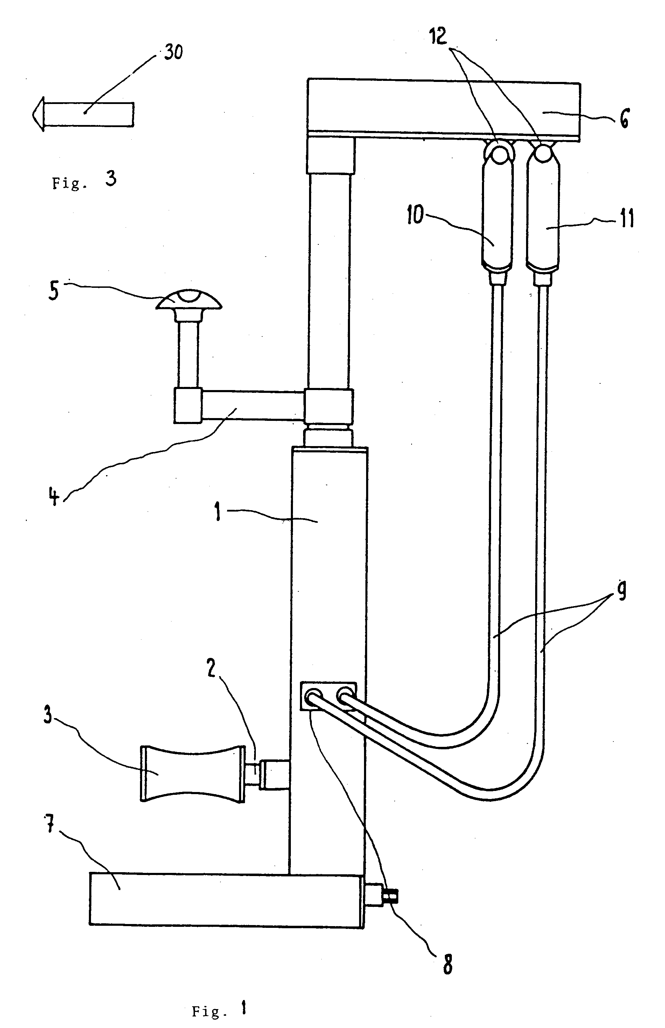

Eine mögliche Verwendung der Einrichtung zur Reparatur von Durchstichen an schlauchlosen Reifen anhand der Erfindung ist auf den angehängten Zeichnungen dargestellt. Abbildung 1. stellt den Seitenblick auf den fixierenden Ständer des reparierten Reifens dar, die Abb. 2. den Längsschnitt des Werkzeuges zur Einführung der Gumminiete in den Einstich im Reifen und die Abb. 3. die Formausführung des Gumminieten.

## Beispiel der Durchführung der Erfindung

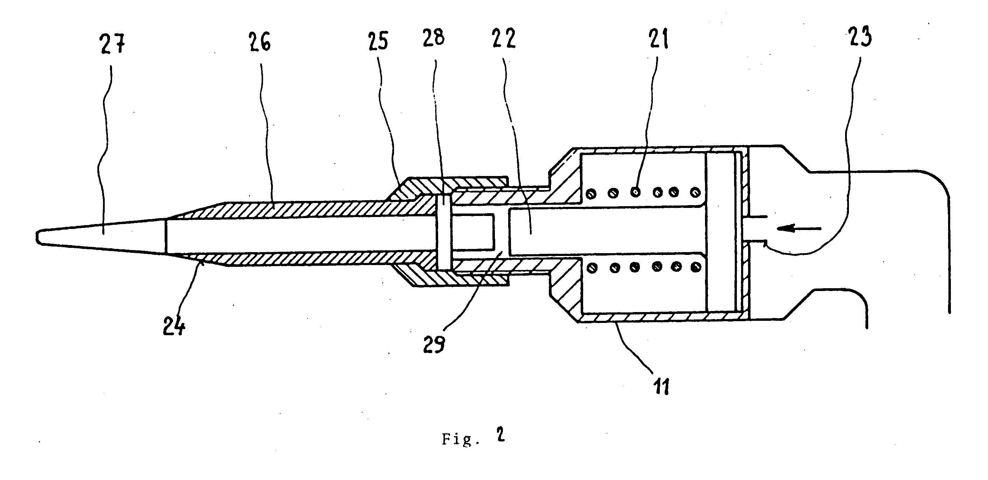

Das Arbeitswerkzeug/11/ in der Form einer Pistole für die Einbringung des Gumminietes in den Durchstich im Reifen /Abb. 2./ besteht aus hohlem Walzförmigen Körper, der in seinem Hohlraum auf der Seite der Halterung mit den Kolben 22 und von der anderer Seite erlegtbarem befestigten/z.B. mittels Mutter mit Lasche /25/, Rohrdurchzieher/26/ versehen ist, der an der äusseren Walzfläche seines freien Endes eine zubereitete kegelförmige Auflauffläche hat/24/. Diese kogelförmige Auflauffläche knüpft sich stetig auf das kegelförmige Ende des ausnehmbaren Durchzugsdornes/27/, der im Hohlraum des Rohrdurchzieher/25/ angebracht ist. Der Durchziehdorn/27/ ist weiters für die feste Fixierung im Werkzeug/11/ bei dessen Einführung in der Einstich in den Reifen an seinem anderen Ende mit einer fixierenden Fläche/28/ versehen der er äusserer Durchmesser grösser ist als der Durchmesser des Hohlraumes des Rohrdurchziehers/26/ und grösser als der Durchmesser des zugewandten Leitnohlraumes/29/ der Kolbenstange des Kolbens/22/ im Körper des Werkzeuges/11/. Auf der Seite des Leithohlraumes/29/ ist zwischen dem Kolben/22/ und der Stirnwand seines Arbeitsraumes ein federnder Ellement/21/ angeordnet, wobei, in der gegenüberliegenden Stirnwand des Arbeitsraumes des Kolbens/22/ eine Öffnung/23/ angebracht ist, die zur Druckluftzufuhr dient. Die Öffnung/23/ ist mittels eines Verbindungsschlauches/9/ an den Druckluftverteiler/8/ angeschlossen, der in fixierendem Ständer des reparierten Reifens montiert ist, und zwar in seiner tragender Seule/1/. Die tragende Seule/1/ ist in ihrem unteren Teil in der mit der Freme/7/ parallel verlaufende Ebene mit zwei profilierten Walzen/3/ ausgestattet, dies zum Zweck der Senkrechtsstellung des reparierten jedoch nicht demontierten Reifens/mit Felge/. Die zwei profilierten Walzen/3/ sind auf drehrbaren Wellen befestigt. In ihrem oberen Teil hat die tragende Seule/1/ eine Ablegefläche/6/ mit seitlichen Aufhängungen/12/ für die Aufhängung des Arbeitwerkzeuges/11/ und der Druckluftpistole/10/, die mit einem weiteren Verbindungsschlauch/9/ an den Druckluftverteiler/8/ angeschlossen ist. In der Ablagefläche können weiters Manometer für die Kontrolle der Luftdruckhöhe, der zum Werkzeug/11/ und Druckluftpistole/10/ zugeführten Luft eingebaut werden, und verschiedene Wölbungen für die Ablage weiterer, benutzen Werkzeuge, wie z.B. für Messer, Zange, Durchstichsreiniger, ein Gefäss mit Schmieremulsion, aber auch Gumminieten/30/. Für eine Möglichkeit der Reparatur von demontierten Reifen ist im weiteren die tragende Seule/1/ im Raum zwischen den profilierten Walzen/3/ und der Ablagefläche/6/ mit einem Abnehmbaren und verstellbaren Arm/4/, Sattel/5/, in einer, zu der mit der senkrechten Achse der Seule/1/ parallel verlaufenden Ebene und zu der, durch die Stirnflächen der profilierten Walzen verlaufende Ebene, winkelrecht verlaufende Ebene, versehen.

Bei der Arbeit mit der Einrichtung anhand dieser Erfindung geht man so vor, dass der lose Reifen in eine wertikale Stellung gebracht wird und auf die profillierten Walzen/3/ der tragenden Seule/1/ des fixierenden Stenders gestützt wird. Durch die Auftragung von z.B. einer Seifenwasser auf die Lauffläche des Reifens und durch die teilweise Aufpumpung des Reifens mit Hilfe von Luftdruckpistole findet man den Durchstich. Dieser wird von der äusseren Seite des Reifens gesäubert und darauf folgend wird in ihn wieder von der äusseren Seite des Reifens das Werkzeug/11/ wieder eingeführt samt des Rohrdurchziehers/26/, in dem der Durchzugsdorn/27/ angeordnet ist. Nach der Lösung der Mutter/25/, wird aus dem Rohrdurchzieher/26/ der Durchzugsdorn/27/ herausgenommen und in den Arbeitwerkzeug/11/ legt man einen Gumminiet/30/ ein, der mit der Emulsion bestrichen ist, und zwar mit dem eigenen Kopf nach vorn. Nach der Verbindung des Körpers des Arbeitswerkzeuges/11/ mit dem Rohrdurchzieher/26/ wird mittels der Mutter mit Lasche/25/ in den Raum oberhalb des Kolbens/22/ des Arbeitwerkzeuges/11/ Pressluft eingeführt und diese drückt mit Hilfe des Kolbens/22/ den elastischen Niet/30/, durch den Rohrdurchzieher/26/ in eine Lage, in der der Kopf des Gumminietes/30/ aus dem Hohlraum des Rohrdurchziehers herausragt. Nach dem Herausziehen des Arbeitwerkzeuges/11/ aus dem Durchstich, wird der Gumminiet/30/ aus dem Durchstich in solche Lage gerausgezogen, in der der eingesetzte Kopf auf die innere Seite der Lauffläche des Reifens ansetzt, falls dies schon bei dem herrausziehen des Arbeitswerkzeuges nicht passier ist. Den Teil des Gumminietes/30/, der über die äussere Fläche des Reifens herausragt wird abgeschnitten, und der Reifen wird mit Hilfe der Druckluftpistolle/10/ auf den geforderten Betriebsdruck aufgepumpt. Bei der Reparatur eines Durchstiches an einem demontierten Reifen verfährt man nach der Feststellung des Durchstiches gleich, lediglich der Reifen ist an der tragenden Seule/1/ des fixierenden Ständers mit Hilfe des einstellbaren Armes/4/ mit Sattel/5/ angebracht.

## Patentansprüche

1. Die Einrichtung zur Reparatur von Einstichen in schlauchlosen Reifen mit Hilfe von Gumminieten. Die Einrichtung setzt sich zusammen aus einen hohlen Walzförmigen Werkzeug, welches von einer Seite in länglicher Achse mit einen beweglichen Kolben und von der anderen Seite in länglicher Achse zerlegbar angeordneten Rohrdurchzieher ausgerüstet ist geprägt dadurch, dass der Rohrdurchzieher/26/ auf der äusseren Fläche am freien Ende eine kegelförmige auflaufende Fläche/24/ hat, die stätig zum kegelförmigen Ende des Durchziehdornes verläuft/27/, Dieser Durchziehdorn ist im Hohlraum des Rohrdurchziehers/26/ angeordnet und am anderen Ende ist er mit einer peripheriefixierender Fläche/28/ versehen, derer äusserer Durchmesser grösser ist, als der Durchmesser des Hohlraumes des Rohrdurchziehers und grösser als der Durchmesser des zugewandten Hohlraumes/29/ der Kolbenstange des Kolbens/22/.

2. Die Einrichtung im Sinne des Punktes 1 ist dadurch gekennzeichnet, dass an der Seite des leitenden Hohlraumes/29/ zwischen den Kolben/22/ und der Stirnwald seines Arbeitsraumes ein federnder Element angebracht ist/21/, wobei sich in der Gegenwand des Arbeitwerkzeuges/11/ eine Öffnung/23/ befindet, die für die Zufuhr der Druckluft dient.

3. Die Einrichtung im Sinne des Punktes 2 ist dadurch gekennzeichnet, dass die Öffnung/23/ mit einem Verbindungsschlauch/9/ an den Druckluftverteiler/8/ angeschlossen ist, der im fixierenden Stender des reparierten Reifens ist, und dessen tragende Seule/1/ ist in ihrem unteren Teil in einer Parallelebene mit der Freme/7/, mit zwei profilierten Walzen/3/, die auf drehbaren Wellen /2/ befestigt sind und in oberem Teil mit diner Abstellfläche mit seitlichen Aufhängungen/12/ für die Aufhängung des Arbeitswerkzeuges/11/ und der Druckluftpistolle/10/, die mit einem Verbindungsschlauch/9/ auf dem Druckluftverteiler/8/ angeschlossen ist, ausgestattet.

4. Die Einrichtung im Sinne des Punktes 3 ist dadurch gekennzeichnet, dass im Raum zwischen den profilierten Walzen/3/ und der Ablegefläche/6/ mit einem abnehmbaren und verstellbaren Arm/4/, Sattel/5/ in einer, zu der mit der senkrechten Achse der Seule/1/ parallel verlaufenden Ebene und zu der durch die Stirnflächen der profillierterten Walzen verlaufende Ebenen, in winkerlecht verlaufende Ebene versehen ist.

30

Fig. 3

12

6

10

11

5

4

1

9

2

3

7

8

Fig. 1

Fig. 2